## Europäisches Patentamt
## European Patent Office
## Office européen des brevets

(19)

(11) Veröffentlichungsnummer: **0 332 613**
**B1**

(12) **EUROPÄISCHE PATENTSCHRIFT**

(45) Veröffentlichungstag der Patentschrift: **14.11.90**

(51) Int. Cl.[5]: **G 01 P 3/481**

(21) Anmeldenummer: **87905427.8**

(22) Anmeldetag: **27.08.87**

(86) Internationale Anmeldenummer:
**PCT/DE87/00380**

(87) Internationale Veröffentlichungsnummer:
**WO 88/04053 02.06.88 Gazette 88/12**

(54) **IMPULSFORMER FÜR INDUKTIVE GEBER.**

(30) Priorität: **22.11.86 DE 3639947**

(43) Veröffentlichungstag der Anmeldung:
**20.09.89 Patentblatt 89/38**

(45) Bekanntmachung des Hinweises auf die
Patenterteilung:
**14.11.90 Patentblatt 90/46**

(84) Benannte Vertragsstaaten:
**DE FR GB**

(56) Entgegenhaltungen:
**WO-A-83/00193**
**DE-A-3 226 073**
**FR-A-2 171 777**

**Patent Abstracts of Japan, volume 8, No. 139**
**(E-253) (1576), 28 June 1984, & JP A 5949014**

(73) Patentinhaber: **ROBERT BOSCH GMBH**
**Postfach 10 60 50**
**D-7000 Stuttgart 10 (DE)**

(72) Erfinder: **KIRSCHNER, Michael**
**Humboldstrasse 57**
**D-7530 Pforzheim (DE)**

Courier Press, Leamington Spa, England.

## Beschreibung

### Stand der Technik

Die Erfindung geht aus von einem Impulsformer mit induktivem Geber nach der Gattung des Hauptanspruchs.

Aus der DE—PS 31 27 220 ist eine Vorrichtung zur Erzeugung einer drehzahlabhängigen Signalfolge aus der periodischen Spannung einer induktiven Geberanordnung zur Drehwinkelerfassung an einer Brennkraftmaschine bekannt. Die Geberspannung wird einer Schwellwertstufe zugeführt. Zur Verringerung der Eigenverstellung sind Mittel vorgesehen, die die Geberspannung vor Zuführung zur Schwellwertstufe amplitudenabhängig in der Weise verschieben, daß der Schaltpunkt der Schwellwertstufe in Abhängigkeit vom Drehwinkel fest ist. Die Amplitudenverscheibung ist aufgeteilt in eine negative und positive Amplitudenverschiebung. Für beide Verschiebungsanteile sind Integrationskondensatoren vorgesehen, die über Dioden mit dem Geber verbunden sind. Parallel zu den Kondensatoren sind Widerstände geschaltet, die zur Einstellung einer definierten Entladung der Integrationskondensatoren dienen.

Nachteilig bei der aus der DE—PS 31 27 220 bekannten Vorrichtung ist es, daß der induktive Geber in der Lage sein muß, die Ladeströme für die Integrationskondensatoren aufzubringen. Die erforderlichen Ströme werden durch die zu den Integrationskondensatoren parallel geschalteten Widerstände zusätzlich erhöht. Ein weiterer Nachteil ist es, daß die Dioden sowie die Integrationskondensatoren mit hohen Spannungen beaufschlagt werden, die bis zu mehreren 100 Volt betragen können, wenn der induktive Geber ein Drehzahlgeber an einer Brennkraftmaschine ist, der einen großen Drehzahlbereich abdecken muß. Eine hohe Betriebsspannung erfordert jedoch voluminöse und teuere Kondensatoren.

Aus der Druckschrift FR—A 2 121 777 ist eine Anordnung zur Bestimmung der Winkelstellung und Drehzahl mit einem induktiven Geber bekannt, die Ausgangsimpulse erzeugt, deren Folgefrequenz proportional zur Drehzahl ist. Dabei ist an den Geberausgang ein Impulsformer angeschlossen, der die vom Geber kommenden Impulse verstärkt und auch auf einen vorgegebenen Höchstwert beschränkt.

### Vorteile der Erfindung

Der erfindungsgemäße Impulsformer gestattet mit geringem schaltungstechnischem Aufwand eine Anpassung eines stark schwankenden Eingangspegels an einen vorgebbaren Pegel und hierdurch eine Unterdrückung von zeitlichen Verschiebungen des Gebersignals. Er weist gegenüber bekannten Impulsformern den Vorteil auf, daß die vom induktiven Geber abgegebene hohe Spannung lediglich an einem am Eingang des Impulsformers angeordneten ohmschen Widerstand auftritt. Der im Impulsformer verwendete Integrationskondensator sowie alle anderen Bauelemente des Impulsformers werden maximal mit der Betriebsspannung des Impulsformers beaufschlagt. Der am Eingang des Impulsformers liegende Widerstand bildet mit Dioden einen Spannungsteiler, der den besonderen Vorteil aufweist, daß durch eine Änderung der Diodenspannung eine Änderung des Spannungsteilerverhältnisses möglich ist. Hierzu sind gesteuerte Spannungsquellen vorgesehen, die ihr Steuersignal vom Integrationskondensator abgreifen. Vorteilhaft ist es weiterhin, daß der Geber nur eine geringe elektrische Leistung aufbringen muß, da der bislang erforderliche Ladestrom der Integrationskondensatoren entfällt. Damit kann das Gebervolumen reduziert werden.

Günstig ist es, wenn die mit dem Integrationskondensator verbundene gesteuerte Spannungsquelle mit einem als Impedanzwandler beschalteten Differenzverstärker ausgeführt ist und wenn eine weitere gesteuerte Spannungsquelle mit einem als invertierenden Verstärker beschalteten Differenzverstärker aufgebaut ist, dessen Eingangssignal das Ausgangssignal des Impedanzwandlers ist.

Ferner ist es von Vorteil, daß der erfindungsgemäße Impulsformer besonders leicht als integrierte Schaltung herstellbar ist, da nur leicht integrierbare Bauelemente vorhanden sind. Diese Ausführungsform bringt eine erhebliche Kosteneinsparung bei der Serienproduktion in der Automobilindustrie mit sich, wenn der erfindungsgemäße Impulsformer als Drehzahl- bzw. Drehwinkelgeber an Brennkraftmaschinen eingesetzt wird.

Weitere Einzelheiten und vorteilhafte Weiterbildungen des erfindungsgemäßen Impulsformers ergeben sich aus weiteren Unteransprüchen in Verbindung mit der folgenden Beschreibung.

### Zeichnung

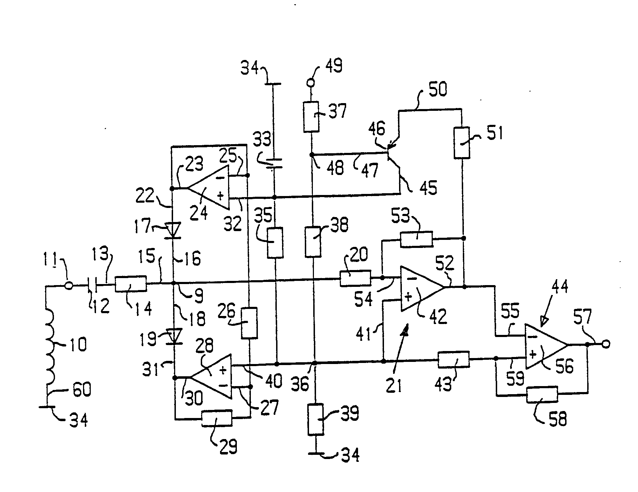

Die einzige Figur zeigt ein Schaltbild eines erfindungsgemäßen Impulsformers.

### Beschreibung des Ausführungsbeispieles

Ein nicht näher beschriebener induktiver Geber 10 ist mit seinem ersten Anschluß 11 über einen Kondensator 12 mit einem ersten Anschluß 13 eines ohmschen Widerstandes 14 verbunden. Der zweite Anschluß 60 des induktiven Gebers 10 liegt an Masse 34. Ein zweiter Anschluß 15 des Widerstands 14 steht in Verbindung mit dem Kathodenanschluß 16 einer ersten Diode 17 und einem Anodenanschluß 18 einer zweiten Diode 19 sowie mit einem Eingangswiderstand 20 eines Verstärkers 21.

Der Anodenanschluß 22 der ersten Diode 17 liegt am Ausgang 23 eines ersten Differenzverstärkers 24. Der Ausgang 23 ist mit dem invertierenden Eingang 25 des ersten Differenzverstärkers 24 verbunden. Weiterhin steht der Ausgang 23 über einen Eingangswiderstand 26 mit dem invertierenden Eingang 27 eines zweiten Differenzverstärkers 28 in Verbindung. Ferner liegt am invertierenden Eingang 27 ein Gegenkopplungswiderstand 29, der zum Ausgang 30 des zweiten Differenzverstärkers 28 führt, der auch mit dem Kathodenanschluß 31 der zweiten Diode 19 verbunden ist.

Am nichtinvertierenden Anschluß 32 des ersten Differenzverstärkers 24 liegt ein Kondensator 33, der gegen eine Masse 34 geschaltet ist. Am Kondensator 33 liegt ein Entladewiderstand 35, der an einen Abgriff 36 eines aus drei Widerständen 37, 38, 39 bestehenden Spannungsteilers angekommen ist. Am Abgriff 36 liegen weiterhin der nichtinvertierende Eingang 40 des zweiten Differenzverstärkers 28, der nichtinvertierende Eingang 41 eines als invertierender Verstärker beschalteten dritten Differenzverstärkers 42 und ein Eingangswiderstand 43 einer Schmitt-Trigger-Stufe 44.

Der Kondensator 33 ist ferner mit dem Kollektoranschluß 45 eines Transistors 46 verbunden. Die Basis 47 des Transistors 46 liegt an einem weiteren Abgriff 48 des aus den drei Widerständen 37, 38, 39 bestehenden Spannungsteilers. Dieser Teiler ist zwischen Masse 34 und einen an Betriebsspannung liegenden Anschlußpunkt 49 geschaltet. Der Emitteranschluß 50 des Transistors 46 liegt über einen Strombegrenzungswiderstand 51 an einem Ausgang 52 des dritten Differenzverstärkers 42. Der Ausgang 52 ist über einen Gegenkopplungswiderstand 53 mit dem invertierenden Eingang 54 des dritten Differenzverstärkers 42 verbunden und liegt am invertierenden Eingang 55 eines vierten als Schmitt-Trigger beschalteten Differenzverstärkers 56. Ein Ausgang 57, an dem das Ausgangssignal des Impulsformers abnehmbar ist, steht über einen Mitkopplungswiderstand 58 mit dem nichtinvertierenden Eingang 59 des vierten Differenzverstärkers 56, an dem auch der Eingangswiderstand 43 angeschlossen ist, in Verbindung.

Der zweite Anschluß 60 des induktiven Gebers 10 liegt vorteilhafter Weise an Masse 34, weil dann eine Verbindungsleitung vom Geber 10 zum Impulsformer gespart wird. Liegt der zweite Anschluß 60 am Abgriff 36 des Spannungsteilers 37, 38, 39, so kann der Kondensator 12 entfallen.

Der erfindungsgemäße Impulsformer arbeitet folgendermaßen:

Ein vom induktiven Geber 10 abgegebenes Wechselspannungssignal gelangt über den ersten Anschluß 11 des Gebers 10 und über den Kondensator 12 sowie über den Widerstand 14 auf den Eingang des Verstärkers 21. Der Verstärker 21 verstärkt die geringste noch vorkommenden Geberspannung so weit, daß die nachfolgende Schmitt-Trigger-Stufe 44 noch schalten kann. Der Verstärker 21 ist ein als invertierender Verstärker beschalteter Differenzverstärker 42. Der Verstärkungsfaktor ist in bekannter Weise gegeben durch das Verhältnis des Gegenkopplungswiderstandes 53, der zwischen dem Ausgang 52 und dem invertierenden Eingang 54 des Differenzverstärkers 42 geschaltet ist, und dem Wert des an den invertierenden Eingang 54 geschalteten Eingangswiderstandes 20.

Der über den Widerstand 51 mit dem Ausgang 52 des Verstärkers 21 verbundene Transistor 46 bildet zusammen mit den Spannungsteilerwiderständen 37, 38 einen Pegeldetektor. Wenn die Ausgangsspannung am Ausgang 52 des Verstärkers 21 infolge höheren Geberspannung größer wird als die Mittenspannung am Abgriff 48 zwischen den Spannungsteilerwiderständen 37, 38 zuzüglich der Basis-Emitter-Spannung des Transistors 46, so wird der Transistors 46 leitend und der mit dem Kollektoranschluß 45 des Transistors 46 verbundene Kondensator 33 wird über den Transistor 46 und den Widerstand 51 aufgeladen.

Die Spannung am Kondensator 33 stellt die Steuerspannung einer gesteuerten Spannungsquelle dar, die als Impedanzwandler mit dem vollständig gegengekoppelten Differenzverstärker 24 realisiert ist. Die Gegenkopplung ist durch die Verbindung des Ausgangs 23 mit dem invertierenden Eingang 25 gegeben. Die Kondensatorspannung liegt an dem nichtinvertierenden Eingang 32 des Differenzverstärkers 24. Der Differenzverstärker 24 erzeugt an seinem Ausgang 23 eine Spannung am Anodenanschluß 22 der ersten Diode 17.

Das am Ausgang 23 des Differenzverstärkers 24 auftretende Signal zum Steuern des Spannungsteilers 14, 17 dient weiterhin als Steuersignal einer weiteren gesteuerten Spannungsquelle, die mit dem als invertierender Verstärker beschalteten Differenzverstärker 28 realisiert ist. Das Ausgangssignal des ersten Differenzverstärkers 24 gelangt über den Eingangswiderstand 26 auf den invertierenden Eingang 27 des zweiten Differenzverstärkers 28, der mit dem zwischen seinem Ausgang 30 und dem invertierenden Eingang 27 geschalteten Widerstand 29 gegengekoppelt ist. Die Verstärkung ist durch das Verhältnis des Gegenkopplungswiderstandes 29 und des Eingangswiderstandes 26 in bekannter Weise gegeben.

Der Ausgang 30 des zweiten Differenzverstärkers 28 bestimmt die Spannung an dem Kathodenanschluß 31 der zweiten Diode 19.

Die beiden Dioden 17 und der Widerstand 14 stellen einen Spannungsteiler mit dem Mittenabgriff 9 dar. Zum Tragen kommen der ohmsche Widerstand des Widerstands 14 sowie der differentielle Widerstand der beiden Dioden 17 und 19. Dieser differentielle Widerstand hängt dabei von ihrem Arbeitspunkt ab. Er ist hoch bei niedriger Spannung und gering bei hoher Spannung an den Dioden. Somit wird ein spannungsgesteuerter Spannungsteiler 14, 17, 19 erhalten.

Es kann es auch zweckmäßig sein, zu der ersten und zweiten Diode 17, 19 weitere Dioden in Reihe zu schalten. Damit ergibt sich eine größere Variation des differentiellen Widerstandes.

Der erste und der zweite Differenzverstärker 24, 28 steuern gegenseitig um eine Bezugsspannung aus, die am Abgriff 36 des aus den Widerständen 37, 38, 39 bestehenden Spannungsteilers gebildet wird. Die symmetrische Aussteuerung um diese am Abgriff 36 auftretende Bezugsspannung hat den Zweck, den Spannungsmittelwert am Mittenabgriff 9 des Spannungsteilers 14, 17, 19 näherungsweise konstant zu halten, damit der Kondensator 12 nicht umgeladen werden muß.

Wird vom induktiven Geber 10 nur eine geringe Spannung abgegeben, so ist eine Abschwächung nicht erforderlich. Der Pegeldetektor 46, 37, 38 stellt dies fest und unterbricht eine weitere Ladung des Kondensators 33. Jetzt sorgt der mit dem Abgriff 36 des Spannungsteilers 37, 38, 39 verbundene Entladewiderstand 35 für eine Entladung des Kondensators 30 auf Bezugspotential. Damit werden die beiden Differenzverstärker 24 und 28 nicht mehr ausgesteuert, da jeweils die nichtinvertierenden Eingänge 32 bzw. 40 nunmehr ebenfalls das am Abgriff 36 auftretende Bezugspotential aufweisen.

Der Ladestrom des Kondensators 33 kann durch den zwischen dem Ausgang 52 und dem Emitteranschluß 50 des Transistors 46 angeordneten Strombegrenzungswiderstand 51 eingestellt werden. Durch Festlegung des Wertes des Strombegrenzungswiderstandes 51 und des Kapazitätswertes des Kondensators 33 läßt sich eine Zeitkonstante des Impulsformers vorgeben, mit der er auf Pegeländerungen am Mittenabgriff 9 reagiert. Da der Kondensator 33 maximal mit der Betriebsspannung des Impulsformers beaufschlagt wird, kann hier eine kleine Bauform gewählt werden, insbesondere ist eine Integration möglich.

Am Ausgang 52 des Verstärkers 21 ist der in bekannter Weise mit dem Eingangswiderstand 43 und dem Mitkopplungswiderstand 58 beschaltete Schmitt-Trigger 44 angeschlossen. Eine Hysterese dieser Stufe ist mit den beiden Widerständen 43, 58 einstellbar. Am Ausgang 57 tritt jedesmal dann ein Spannungssprung auf, wenn die induktive Geberspannung eine bestimmte Schwelle über- und eine bestimmte Schwelle unterschreitet.

**Patentansprüche**

1. Impulsformer mit einem induktiven Geber (10), insbesondere induktiven Drehzahlgeber bzw. Drehwinkelgeber für Brennkraftmaschinen, und einer das Ausgangssignal des Gebers (10) beeinflussenden Schaltungsanordnung, die zwischen dem induktiven Geber (10) und einer Schaltstufe (44), vorzugsweise einer Schmitt-Trigger-Stufe, liegt, wobei ein erster Anschluß des induktiven Gebers (10) mit einem Widerstand (14) eines am Eingang des Impulsformers angeordneten Spannungsteilers (14, 17, 19) verbunden ist, dadurch gekennzeichnet, daß der Spannungsteiler (14, 17, 19) mit einer von der Geberspannung abhängigen, gesteuerten Spannungsquelle (24, 28) verbunden ist, die auf wenigstens ein spannungsabhängiges Element (17, 19) des Spannungsteilers (14, 17, 19) wirkt.

2. Impulsformer nach Anspruch 1, dadurch gekennzeichnet, daß der Widerstand (14) ein ohmscher Widerstand ist, der erste Anschluß (11) des induktiven Gebers (10) mit einem ersten Anschluß (13) des ohmschen Widerstands (14) verbunden ist und daß ein zweiter Anschluß (15) des Widerstands (14) mit einem Anschluß (16, 18) wenigstens einer Diode (17, 19) verbunden ist, derart, daß die Verbindungsstelle des zweiten Anschlusses (15) des Widerstands (14) mit dem Anschluß (16, 18) der Diode (17, 19) einen Mittenabgriff (9) eines Spannungsteilers (14, 17) bildet.

3. Impulsformer nach Anspruch 2, dadurch gekennzeichnet, daß der zweite Anschluß (15) des Widerstands (14) mit dem Kathodenanschluß (16) einer ersten Diode (17) und mit dem Anodenanschluß (18) einer zweiten Diode (19) verbunden ist, wobei der Widerstand (14) und die beiden Dioden (17, 19) einen Spannungsteiler bilden.

4. Impulsformer nach Anspruch 3, dadurch gekennzeichnet, daß der Anodenanschluß (22) der ersten Diode (17) und der Kathodenanschluß (31) der zweiten Diode (19) jeweils mit gesteuerten Spannungsquellen (24, 28) verbunden sind.

5. Impulsformer nach einem der Ansprüche 1 bis 4, dadurch gekennzeichnet, daß mit einem bzw. dem Mittenabgriff (9) des Spannungsteilers (14, 17, 19) ein Verstärker (21) verbunden ist.

6. Impulsformer nach einem der vorhergehenden Ansprüche, dadurch gekennzeichnet, daß zwischen dem Verstärker (21) und wenigstens einer gesteuerten Spannungsquelle (24, 28) ein Pegeldetektor (46, 37, 38) und ein Integrator (51, 33) vorgesehen ist.

7. Impulsformer nach Anspruch 6, dadurch gekennzeichnet, daß der Integrator einen am Ausgang des Verstärkers (21) angeschlossenen Widerstand (51) und einen Kondensator (33) umfaßt.

8. Impulsformer nach Anspruch 6, dadurch gekennzeichnet, daß der Pegeldetektor einen Transistor (46) aufweist, dessen Basis (47) an einem Abgriff (48) eines zwischen Betriebsspannung (49) und Masse (34) geschalteten Spannungsteilers (37, 38, 39) geschaltet ist.

9. Impulsformer nach Anspruch 6 oder 7, dadurch gekennzeichnet, daß der Integrationskondensator (33) über einen Widerstand (35) mit einem Abgriff (36) des zwischen Betriebsspannung (49) und Masse (34) geschalteten Spannungsteilers (37, 38, 39) verbunden ist.

10. Impulsformer nach einem der Ansprüche 2 bis 9, dadurch gekennzeichnet, daß als gesteuerte Spannungsquellen (24, 28) Differenzverstärker vorgesehen sind.

11. Impulsformer nach Anspruch 10, dadurch gekennzeichnet, daß ein erster Differenzverstärker (28) als Impedanzwandler beschaltet ist.

12. Impulsformer nach Anspruch 10, dadurch gekennzeichnet, daß ein zweiter Differenzverstärker (28) als invertierender Verstärker beschaltet ist.

13. Impulsformer nach Anspruch 12, dadurch gekennzeichnet, daß der invertierende Verstärker (26, 28, 29) einen Verstärkungsfaktor von Eins aufweist, der mit dem Eingangswiderstand (26) und dem Gegenkopplungswiderstand (29) einstellbar ist.

14. Impulsformer nach einem der Ansprüche 5 bis 13, dadurch gekennzeichnet, daß der Ausgang des Verstärkers (21) mit dem Eingang (55) der Schaltstufe (44) verbunden ist.

15. Impulsformer nach einem der Ansprüche 2 bis 14, dadurch gekennzeichnet, daß zwischen den induktiven Geber (10) und den Widerstand (14) ein Kondensator (12) geschaltet ist.

16. Impulsformer nach einem der Ansprüche 1 bis 15, dadurch gekennzeichnet, daß der zweite Anschluß (60) des induktiven Gebers (10) an Masse (34) geschaltet ist.

17. Impulsformer nach einem der vorhergehenden Ansprüche, dadurch gekennzeichnet, daß der Verstärker (21) mit einem als invertierender Verstärker beschalteten Differenzverstärker (42) realisiert ist.

**Revendications**

1. Formeur d'impulsions comportant un capteur inductif (10) en particulier un capteur inductif de vitesse de rotation ou un capteur d'angle de rotation pour des moteurs à combustion interne ainsi qu'un circuit de commutation influençant le signal de sortie du capteur (10), circuit qui est prévu de préférence entre le capteur inductif (10) et un étage de commutation (44) de préférence un déclencheur de Schmitt, une première borne du capteur inductif (10) étant reliée à une résistance (14) d'un diviseur de tension (14, 17, 19) relié à l'entrée du formeur d'impulsions, formeur caractérisé en ce que le diviseur de tension (14, 17, 19) est relié à une source de tension (24, 28) commandée en fonction de la tension du capteur, source qui agit sur au moins un élément (17, 19) dépendant de la tension et appartenant au diviseur de tension (14, 17, 19).

2. Formeur d'impulsions selon la revendication 1, caractérisé en ce que la résistance (14) est une résistance ohmique, la première borne (11) du capteur inductif (10) étant reliée à une première borne (13) de cette résistance ohmique (14) et une seconde borne (15) de la résistance (14) étant reliée à une borne (16, 18) d'au moins une diode (17, 19) de manière que le point de jonction de la seconde borne (15) de la résistance (14) avec la borne (16, 18) de la diode (17, 19) forme le point de jonction (9) d'un diviseur de tension (14, 17).

3. Formeur d'impulsions selon la revendication 1, caractérisé en ce que la seconde borne (15) de la résistance (14) est reliée à la borne de cathode (16) d'une première diode (17) et à la borne d'anode (18) d'une seconde diode (19), la résistance (14) et les deux diodes (17, 19) formant un diviseur de tension.

4. Formeur d'impulsions selon la revendication 3, caractérisé en ce que la borne d'anode (22) de la première diode (17) et la borne de cathode (31) de la seconde diode (19) sont reliées respectivement à des sources de tension commandées (24, 28).

5. Formeur d'impulsions selon l'une des revendications 1 à 4, caractérisé par un amplificateur (21) relié au point de jonction (9) du diviseur de tension (14, 17, 19).

6. Formeur d'impulsions selon l'une des revendications précédentes, caractérisé par un détecteur de niveau (46, 37, 38) et un intégrateur (51, 33) branchés entre l'amplificateur (21) et au moins une source de tension commandée (24, 28).

7. Formeur d'impulsions selon la revendication 6, caractérisé en ce que l'intégrateur comprend une résistance (51) reliée à la sortie de l'amplificateur (21) et un condensateur (33).

8. Formeur d'impulsions selon la revendication 6, caractérisé en ce que le détecteur de niveau comprend un transistor (46) dont la base (47) est reliée au point de jonction (48) d'un diviseur de tension (37, 38, 39) branché entre la tension de fonctionnement (49) et la masse (34).

9. Formeur d'impulsions selon les revendications 6 ou 7, caractérisé en ce que le condensateur d'intégration (33) est relié par une résistance (35) au point de jonction (36) du diviseur de tension (37, 38, 39) branché entre la tension de fonctionnement (49) et la masse (34).

10. Formeur d'impulsions selon l'une des revendications 2 à 9, caractérisé en ce que les sources de tension (24, 28) commandées sont des amplificateurs différentiels.

11. Formeur d'impulsions selon la revendication 10, caractérisé par un premier amplificateur différentiel (28) constitué comme convertisseur d'impédance.

12. Formeur d'impulsions selon la revendication 10, caractérisé par un second amplificateur différentiel (28) monté en amplificateur-inverseur.

13. Formeur d'impulsions selon la revendication 12, caractérisé en ce que l'amplificateur-inverseur (26, 28, 29) présente un coefficient d'amplification égal à l'unité réglable par la résistance d'entrée (26) et la résistance de contre-réaction (29).

14. Formeur d'impulsions selon l'une des revendications 5 à 13, caractérisé en ce que la sortie de l'amplificateur (21) est reliée à l'entrée (55) de l'étage de commutation (44).

15. Formeur d'impulsions selon l'une des revendications 2 à 14, caractérisé en ce qu'entre le capteur inductif (10) et la résistance (14), il est prévu un condensateur (12).

16. Formeur d'impulsions selon l'une des revendications 1 à 15, caractérisé en ce que la seconde borne (60) du capteur inductif (10) est reliée à la masse (34).

17. Formeur d'impulsions selon l'une des revendications précédentes, caractérisé en ce que l'amplificateur (21) est réalisé par un amplificateur différentiel (42) monté en amplificateur-inverseur.

**Claims**

1. Pulse shaper with an inductive transmitter (10), particularly an inductive speed transmitter or angle-of-rotation transmitter for internal combustion engines, and with a circuit arrangement which influences the output signal of the transmitter (10) and which is located between the inductive transmitter (10) and a switching stage (44), preferably a Schmitt trigger stage, a first connection of the inductive transmitter (10) being connected to one resistor (14) of a voltage divider (14, 17, 19) arranged at the input of the pulse shaper, characterized in that the voltage divider (14, 17, 19) is connected to a controlled voltage source (24, 28) which is dependent on the transmitter voltage and which acts on at least one voltage-dependent element (17, 19) of the voltage divider (14, 17, 19).

2. Pulse shaper according to Claim 1, characterized in that the resistor (14) is an ohmic resistor, that the first connection (11) of the inductive transmitter (10) is connected to a first connection (13) of the ohmic resistor (14) and that a second connection (15) of the resistor (14) is connected to a connection (16, 18) of at least one diode (17, 19), in such a manner that the junction of the second connection (15) of the resistor (14) with the connection (16, 18) of the diode (17, 19) forms a centre tap (9) of a voltage divider (14, 17).

3. Pulse shaper according to Claim 2, characterized in that the second connection (15) of the resistor (14) is connected to the cathode connection (16) of a first diode (17) and to the anode connection (18) of a second diode (19), the resistor (14) and the two diodes (17, 19) forming a voltage divider.

4. Pulse shaper according to Claim 3, characterized in that the anode connection (22) of the first diode (17) and the cathode connection (31) of the second diode (19) are in each case connected to controlled voltage sources (24, 28).

5. Pulse shaper according to one of Claims 1 to 4, characterized in that an amplifier (21) is connected to one or the centre tap (9) of the voltage divider (14, 17, 19).

6. Pulse shaper according to one of the preceding claims, characterized in that a level detector (46, 37, 38) and an integrator (51, 33) is (sic) provided between the amplifier (21) and at last one controlled voltage source (24, 28).

7. Pulse shaper according to Claim 6, characterized in that the integrator comprises a resistor (51), which is connected to the output of the amplifier (21), and a capacitor (33).

8. Pulse shaper according to Claim 6, characterized in that the level detector exhibits a transistor (46) the base (47) of which is connected to a tap (48) of a voltage divider (37, 38, 39) connected between operating voltage (49) and earth (34).

9. Pulse shaper according to Claim 6 or 7, characterized in that the integration capacitor (33) is connected via a resistor (35) to a tap (36) of the voltage divider (37, 38, 39) connected between operating voltage (49) and earth (34).

10. Pulse shaper according to one of Claims 2 to 9, characterized in that differential amplifiers are provided as controlled voltage sources (24, 28).

11. Pulse shaper according to Claim 10, characterized in that a first differential amplifier (28) is connected as impedance converter.

12. Pulse shaper according to Claim 10, characterized in that a second differential amplifier (28) is connected as inverting amplifier.

13. Pulse shaper according to Claim 12, characterized in that the inverting amplifier (26, 28, 29) exhibits a gain of one which can be set by means of the input resistor (26) and the negative-feedback resistor (29).

14. Pulse shaper according to one of Claims 5 to 13, characterized in that the output of the amplifier (21) is connected to the input (55) of the switching stage (44).

15. Pulse shaper according to one of Claims 2 to 14, characterized in that a capacitor (12) is connected between the inductive transmitter (10) and the resistor (14).

16. Pulse shaper according to one of Claims 1 to 15, characterized in that the second connection (60) of the inductive transmitter (10) is connected to earth (34).

17. Pulse shaper according to one of the preceding claims, characterized in that the amplifier (21) is implemented by means of a differential amplifier (42) which is connected as inverting amplifier.